Europäisches Patentamt

European Patent Office

Office européen des brevets

(11) Publication number: **0 216 540**
A1

# (12) EUROPEAN PATENT APPLICATION

(21) Application number: 86306758.3

(22) Date of filing: 02.09.86

(51) Int. Cl.⁴: **F 16 H 3/72**
F 16 D 31/04
//F16H1/455

(30) Priority: 03.09.85 AU 2264/85

(43) Date of publication of application:
01.04.87 Bulletin 87/14

(84) Designated Contracting States:
AT BE CH DE FR GB IT LI LU NL SE

(71) Applicant: RINEFAS LIMITED
Unit 3, 45-47 Vore Street
Silverwater New South Wales 2141(AU)

(72) Inventor: Haage, Dieter
48 Kilmarnock Road
Engadine New South Wales 2233(AU)

(74) Representative: Baillie, Iain Cameron et al,
c/o Ladas & Parry Isartorplatz 5
D-8000 München 2(DE)

(54) Rotary power transmission apparatus.

(57) A variable speed transmission apparatus 10 comprising an internal ring gear 23 rotatable about a predetermined axis 14, a carriage 12 also rotatable about said axis 14, and upon which a planetary gear 16 is eccentrically mounted and meshingly engaged with the ring gear 23 so that upon relative rotation between the carriage 12 and the ring gear 23, the planetary gear 16 is caused to rotate, said planetary gear 16 cooperating with said ring gear 23 to define a cavity 28 to receive a working fluid, a seal 29 mounted on the carriage 12 and dividing said cavity 29 into two chambers 24, 25 between which the working fluid is pumped upon rotation of the planetary gear 16, and an adjustable resistance provided between the two chambers 24, 25 to thereby govern the resistance to the relative movement between the carriage 12 and ring gear 23.

FIG. 1

0216540

## ROTARY POWER TRANSMISSION APPARATUS

The present invention relates to variable speed transmission apparatus in clutches.

Variable speed transmission apparatus, including clutches, are generally complex and do not provide for a smooth transition between various speeds. Previously known apparatus, due to their complexity, have been prone to failure and are generally expensive to manufacture and to maintain.

It is the object of the present invention to overcome or substantially ameliorate the above disadvantages.

There is disclosed herein a variable speed transmission apparatus comprising an internal ring gear rotatable about a predetermined axis, a carriage also rotatable about the said axis, a planetary gear eccentrically mounted on said carriage and meshingly engaged with said ring gear so as to define a cavity to receive a working fluid, seal means mounted on said carriage and dividing said cavity to two chambers, passage means extending between said chambers and flow resistance means to adjustably inhibit the flow of hydraulic fluid between the two chambers upon relative rotation between the ring gear and carriage.

A preferred form of the present invention will now be described by way of example with reference to the accompanying drawings wherein:

Figure 1 is a schematic section side elevation of a variable speed transmission or clutch assembly;

Figure 2 is a schematic part section end elevation of the transmission or clutch assembly of Figure 1;

Figure 3 is a parts exploded schematic perspective view of a rotary power transmission apparatus;

Figure 4 is a schematic part sectioned side elevation of the apparatus of Figure 1;

Figure 5 is a schematic parts exploded perspective view of a transmission device employing the apparatus of Figures 1 and 2;

Figure 6 is a schematic sectioned end elevation of the apparatus of Figures 1 and 2;

Figures 7 to 9 are schematic side elevations of an application of the device of Figure 3; and

Figure 10 is a schematic part sectioned side elevation of the device of Figures 5 to 7 applied to a differential assembly which may be employed in a motor vehicle.

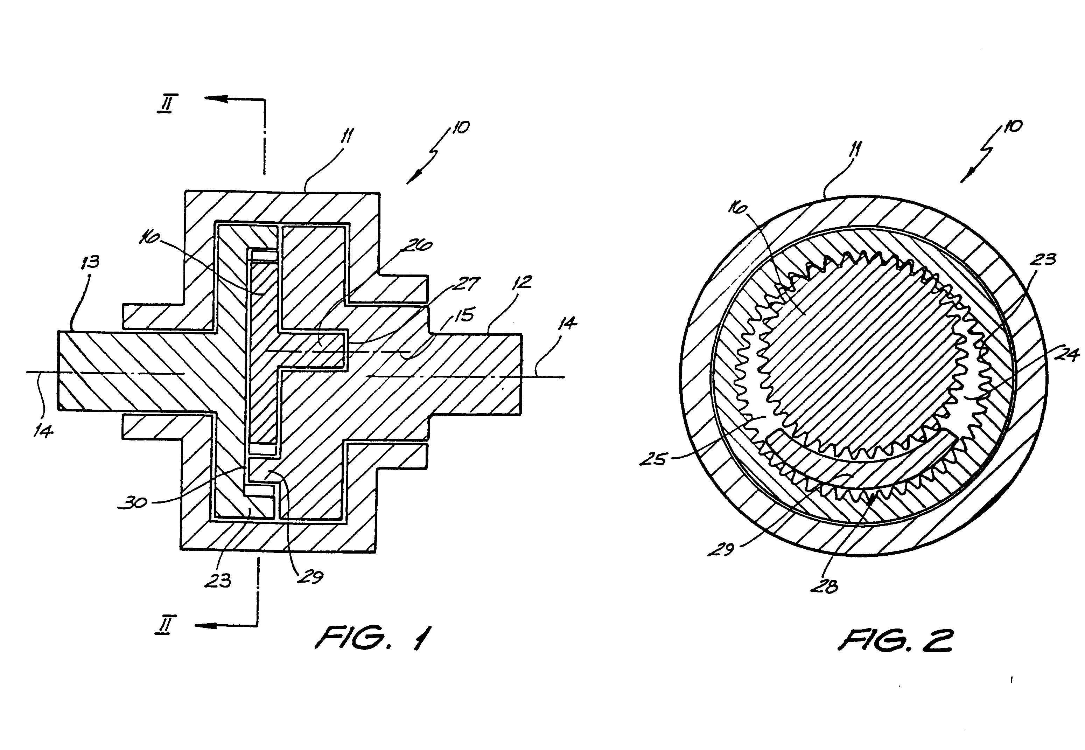

In Figures 1 and 2 of the accompanying drawings there is schematically depicted a variable speed transmission apparatus 10. The apparatus 10 has an outer casing 11 which rotatably supports a ring gear shaft 13 fixed to a ring gear 23. Also rotatably supported by the casing 11 is a carriage 12 having a bearing passage 27. Rotatably supported in the passage 27 is a shaft 26 to which is attached a planetary gear 16. The carriage 12 rotates about the axis 14 together with the ring gear shaft 13. The planetary gear 16 rotates about an axis 15 eccentric relative to the shaft 14. The planetary gear 16 meshingly engages with the ring gear 23 and cooperates with the ring gear 23, carriage 12 and casing 11 to provide a generally enclosed cavity 28. The cavity 28 is generally sealingly divided into two chambers 24 and 25 by a sealing member 29. The sealing member 29 is fixed to the carriage 12 so as to rotate therewith together with the planetary gear 16.

Existing between the ring gear 23, carriage 12, sealing member 29, planetary gear 16, and the casing 11 is a clearance 30. Located within the cavity 28 and clearance 30 is a hydraulic fluid to be pumped between the two members 24 and 25 via the clearance 30.

In operation of the above described transmission apparatus, the cavity 28, together with the clearance 30 is filled with a working fluid. The working fluid is pumped between the chambers 24 and 25 by the planetary action of the gear 16. The planetary action of the gear 16 is governed by the variable resistance to the passage of the fluid through the clearance 30. If the carriage 12 is rotated, and there is very little resistance to the flow of fluid between the chambers 24 and 25, then the working fluid will freely move therebetween. In this particular configuration, little, if any at all, motion will be transferred to the shaft 13 from the carriage 12. If there is considerable resistance, or if untimately there is no fluid flow at all, then the speed of the carriage 12 would be the same as the speed of the shaft 13. Accordingly, the relative speeds of the casing 12 and shaft 13 may be varied by varying the clearance 30. Accordingly, if the shaft 13 (together with ring gear 23) is movable and/or the carriage 12, is movable then the clearance 30 may be adjusted to thereby adjust the resistance to the flow of the working fluid. The shaft 13 and/or the carriage 12 may be moved axially by means of a thrust bearing.

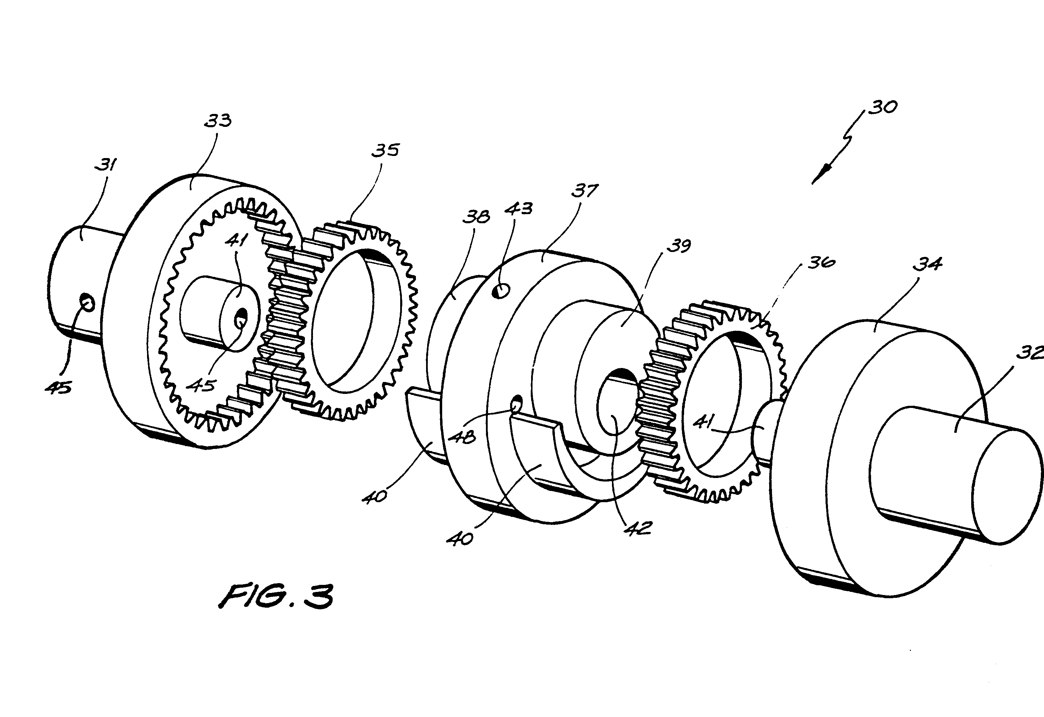

In Figures 3, 4 and 5 there is schematically depicted a rotary power transmission assembly 30. In the present instance, there is provided a rotor assembly 30 coupling a pair of shafts 31 and 32. Fixed to each shaft is a ring gear 33 and 34 respectively which each meshingly engage with a planetary gear 35 and 36. There is further provided a planetary gear carrier 37 having mounting spigots 38 and 39 which respectively rotatably support the planetary gears 35 and 36. Also mounted on the carrier 37 are sealing elements 40. Fixed to each shaft 31 and 32 is a carrier support spigot 41 which are received within a passage 42 formed in the carrier 37 so that the carrier 37 is rotatably supported by the spigots 41. Also formed in the carrier 37 is a passage 43 which extends to the periphery of the carrier 37 at opening 44. Extending through the shaft 31 and its associated spigot 41 is a further passage 25 which communicates with a passage 46 in the carrier 37 terminating at opening 47 on a face of the carrier 37. Also extending between opposite sides of the carrier 37 is a still further passage 48.

In operation of the above described rotor assembly 30, each planetary gear 35 or 36 cooperates with its associated ring gear 33 and sealing member 40 to provide a pair of spaced chambers between which fluid may be pumped by rotation of the respective ring gear 36 or 37 relative to and about the axis of its associated ring gear 33 or 34.

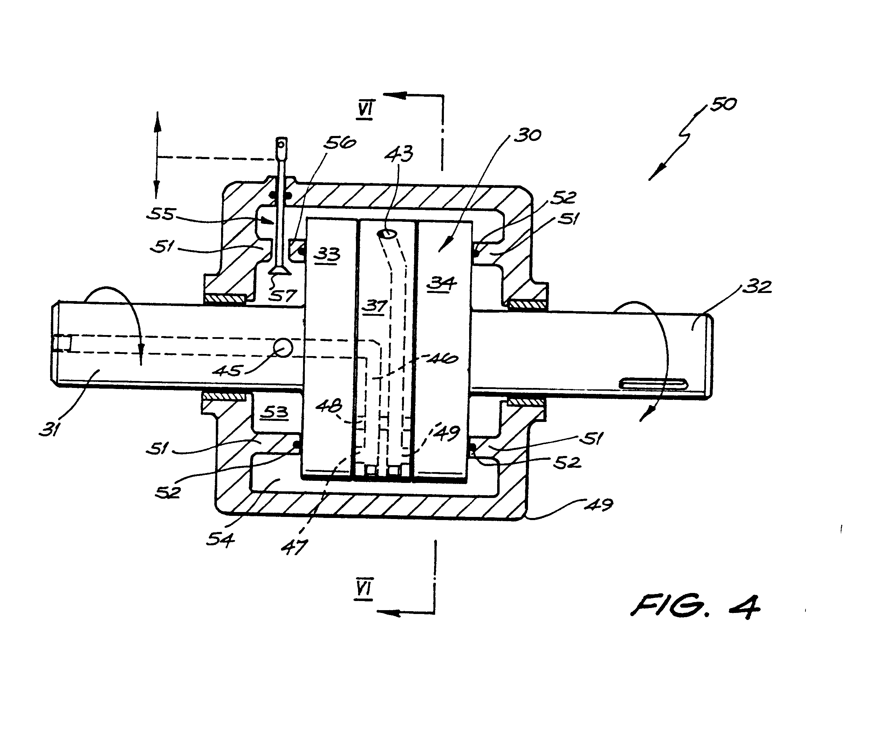

The above described rotor assembly 30 is to be located in a housing 40 so as to form the transmission apparatus 50 of Figure 4. The housing 49 rotatably supports each shaft 31 and 32 and sealingly encompasses the rotor assembly 30. Additionally, the housing 49 is provided with sealing ridges 51 which are of annular configuration and provided with circular sealing elements 52. The ridges 51 cooperate to internally divide the housing 49 into a first chamber 53 and a second chamber 54. Formed in one of the ridges 51 is a valve assembly 55 consisting of a valve seat 56 which cooperates with a movable valve member 57. The movable valve member 57 allows selective fluid communication between the chambers 53 and 54. It should be appreciated that the passage 43 communicates with the chamber 54, and the passage 45 communicates with the chamber 53. Accordingly, there is a hydraulic circuit extending in a loop between the chambers 53 and 54 via the passages 45, 46, 48 and 43.

As an example of the operation of the above described apparatus 50, if the shaft 31 is driven, then rotary power is transmitted to the shaft 32 in accordance with the resistance to the flow of fluid between the two chambers 53 and 54. For example, if the movable valve member 57 closes the valve assembly 55, the rotor assembly 30 will rotate as a single unit so that the rotary speed of the shaft 31 will equal the rotary speed of the shaft 32. However, if the movable valve member 57 allows direct communication between the chambers 53 and 54, then there will be relative rotation between the shafts 31 and 32. More particularly, if the shaft 31 is driven, and a load applied to the shaft 32, then rotary power will be transmitted between the shafts 31 and 32 according to the position of the movable valve member 57. When shaft 41 is driven, the ring gear 33 is caused to rotate about its central axis. This rotation of the ring gear 33 will cause rotation of the planetary gear 35 firstly about its own longitudinal axis. This rotation of the gear 35 will cause the working fluid to be pumped from one side of the carrier 37 to the other. This pumped fluid will then cause rotation of the planetary gear 36 which in turn will cause rotation of the ring gear 34. It should be appreciated that the passages 43, 46 and 48 may be arranged so that the direction of rotation of the shafts 31 and 32 is the same or in opposite directions.

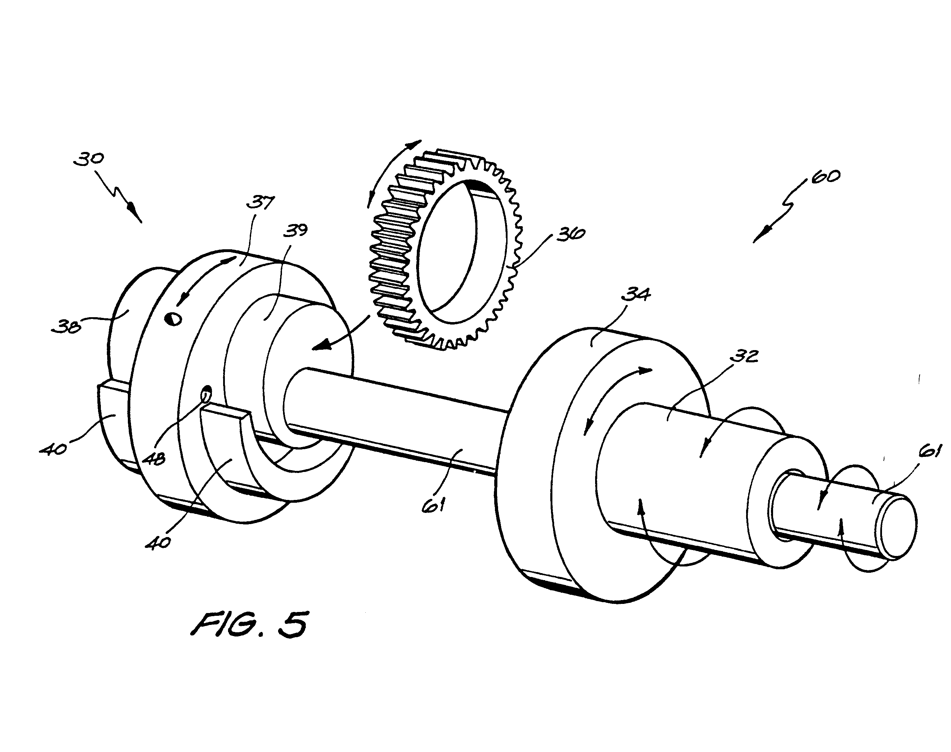

In Figure 5 there is schematically depicted the rotor assembly 30 modified for use as a differential for a motor vehicle, the differential assembly 60 of Figure 5 includes the rotor assembly 30 discussed with reference to Figures 3 and 4, however, the shaft 32 and spigot 41 are arranged for independent rotation. In this embodiment, the rotor assembly 30 includes the carrier 37, and ring gear 34 fixed to the shaft 32. However, the spigot 41 described with reference to Figures 3 and 4 is replaced by a shaft 61 which extends through the ring gear 34 and shaft 32 so that the ring gear and shaft 32 are rotatably supported on the shaft 61. Accordingly, as the carrier 37 is also free to rotate, the shaft 32 and the shaft 61 can both be used as an output from the rotary input power applied to the shaft 31.

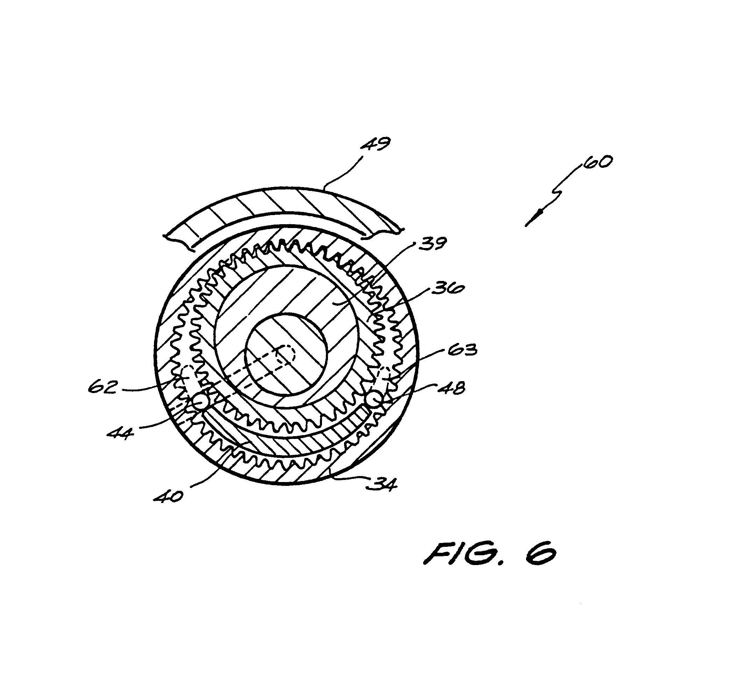

In Figure 6 there is schematically depicted a sectioned end elevation of the apparatus of Figure 6. In this particular illustration the two chambers dividingly sealed by means of the sealing members 40 are more easily seen. More particularly, there is illustrated the two chambers 62 and 63 between which the working fluid is pumped.

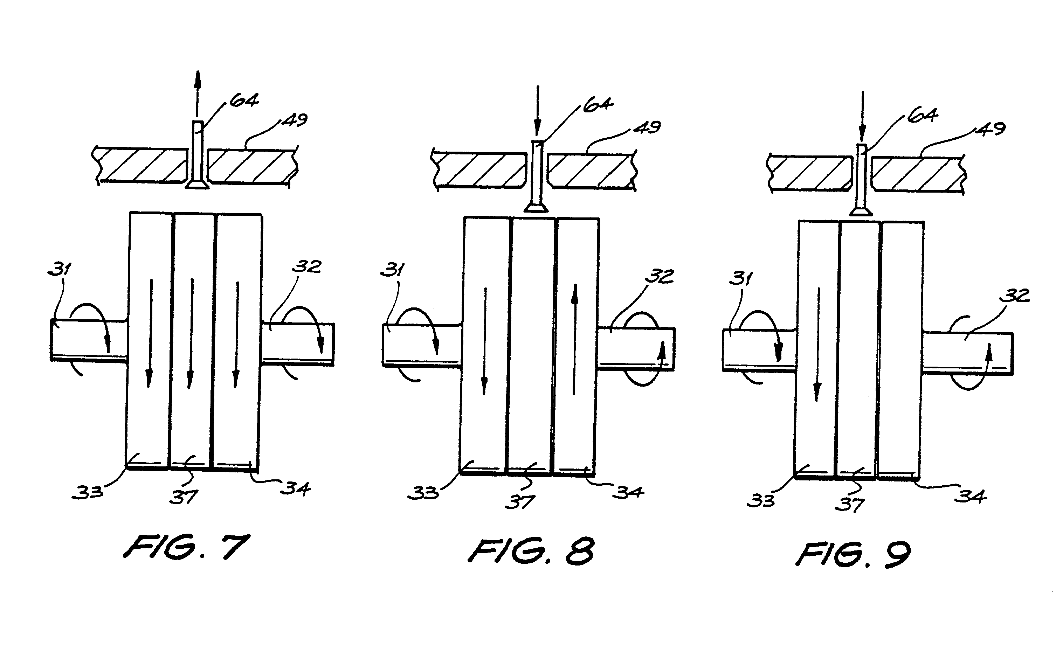

Turning now to Figures 7 to 9 wherein there is provided in the housing 49 of the apparatus 50 of Figure 4, a brake means 64 which may be operated so as to selectively engage the carrier 37 so as to prevent rotation thereof. As can be seen from Figure 7, if the carrier 37 is free to rotate then it will rotate with the shafts 31 and 32. If on the other hand, it is prevented from movement, the shafts 31 and 32 are caused to rotate in opposite directions. In a still further embodiment, the ring gear 34 and its associated planetary gear 36, have been increased in width. Accordingly, for each revolution of the planetary gear 36 a greater amount of working fluid is pumped by the planetary gear 36. Accordingly, the rotational speed of the ring gear 34 will be less than the rotational speed of the ring gear 33 in proportion to the differences in width of the ring gears 33 and 34, assuming they have the same effective operating diameters.

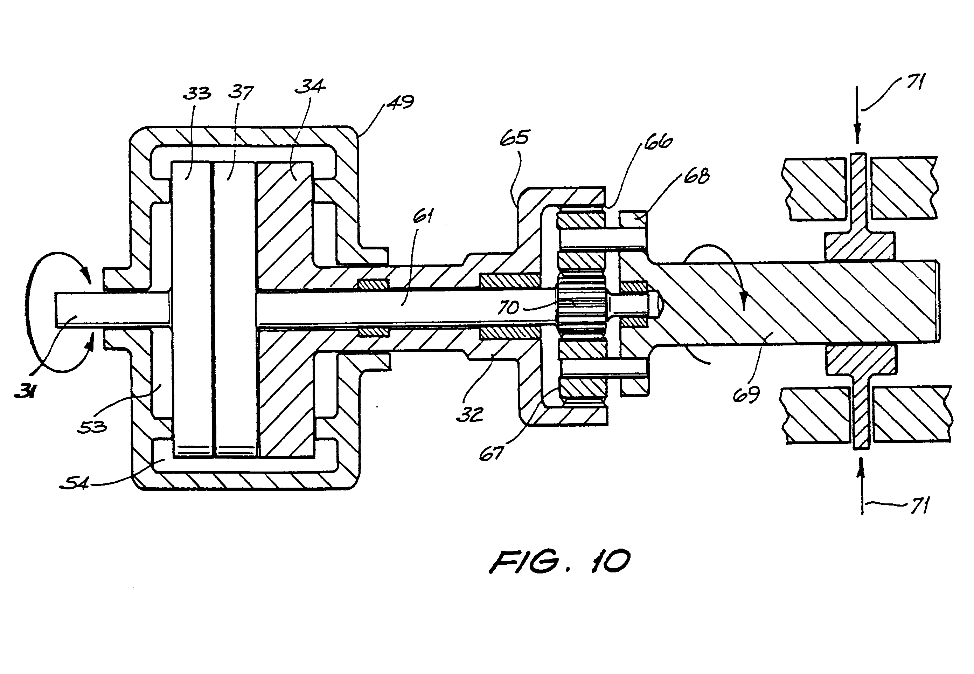

Turning now to Figure 10 wherein the differential assembly 60 of Figure 5 is applied to an assembly usable in a motor vehicle. More particularly, the shaft 32 is provided with a flared end 65 formed with a ring gear 66. The ring gear 66 meshingly engages a plurality of planetary gears 47 supported on a carrier 68 fixed to a shaft 79. The end of the shaft 32 is provided with a gear 70 which meshingly engages the planetary gears 67. Accordingly, there are two outputs from this assembly, one from the shaft 69 and the other from the shaft 32. In Figure 10 there is schematically depicted a load 71 being applied to the shaft 69.

The present invention, in its preferred forms above, is suitable for inclusion in an automatic gear box assembly for a motor vehicle. Such an assembly would be of conventional construction apart from the rotor assembly 30, described previously, and is used in replacement of the traditional clutch assembly. The shaft 31 of the rotor assembly 30 would be coupled to the torque converter of the gear box assembly and the shaft 32 coupled to the tailshaft coupling of the gear box assembly.

CLAIMS

1.   A variable speed transmission apparatus 10 comprising an internal ring gear rotatable about a predetermined axis 14, a carriage 12 also rotatable about the said axis 14, a planetary gear 16 eccentrically mounted on said carriage 14 and meshingly engaged with said ring gear 23 so as to define a cavity 28 to receive a working fluid, seal means 29 mounted on said carriage and dividing said cavity to two chambers 24,25, passage means 30 extending between said chambers 24,25 and flow resistance means to adjustably inhibit the flow of hydraulic fluid between the two chambers 24,25 upon relative rotation between the ring gear and carriage.

2.   The variable speed transmission apparatus 10 of claim 1, wherein said passage means is provided by a clearance 30 between said carriage 12 and ring gear 23, and said flow restriction means is provided by said carriage 12 and/or said ring gear 23 being movably mounted to enable relative axial movement therebetween to thereby adjust the clearance 30 between said carriage 12 and ring gear 23 so as to adjustably inhibit the flow of hydraulic fluid between the two chambers 24,25.

3.   A variable speed transmission device 50 including a hollow housing 49, the apparatus 10 of claim 1 sealingly located within said housing 49, and said passage means includes a first passage 43 extending from a first one of said chambers 24 to a first portion 54 of the hollow defined within said housing 49, and a second passage 45 extending from the other chamber 25 to a second portion 53 of said hollow, and said device 50 further includes seal means 51 sealingly dividing the two portions 53,54 of said hollow and said flow resistance means 56,57 adjustably inhibits the flow of hydraulic fluid between said two portions 53,54.

4.   The device 50 of claim 3 further including brake means 64 to selectively limit rotation of said carriage 37 relative to said ring gear 33.

- 2 -

5. A variable speed transmission drive for a motor vehicle, said drive including the device 50 of claim 3_ further including a second ring gear 34, a second planetary gear 36 meshingly engaged with said second ring gear 34, said second planetary gear 34 being mounted on said carriage 37 so as to provide a further cavity, further seal means 40 dividing said further cavity into two further chambers, with said passage means including a passage 48 joining one of the first mentioned cavities to one of said further cavities, and said flow restriction means adjustably inhibits flow between the other two cavities.

6. The transmission of claim 5 including a driven shaft 61 extending from said carriage 37, and a drive shaft 31 drivingly associated with one of said planetary gears, and a further driven shaft 69 extending from the other planetary gear.

7. The transmission of claim 6 further including a planetary gear arrangement including a carrier 68, said planetary gear arrangement being driven by the differential in speed between said driven shafts, and a final drive shaft extending from said carrier.

0216540

FIG. 2

FIG. 1

FIG.3

FIG. 4

FIG. 5

FIG. 6

0216540

FIG. 9

FIG. 8

FIG. 7

FIG. 10

## European Patent Office

## EUROPEAN SEARCH REPORT

Application number

EP 86 30 6758

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 031 508 (HÄRLE) <br> * Page 13, claim 1; figures 1,2 * | 1,3 | F 16 H 3/72 <br> F 16 D 31/04 // <br> F 16 H 1/455 |
| X | US-A-1 828 861 (DE HART) <br> * Whole document * | 1,3 | |
| A | US-A-3 234 822 (YOUNG) <br> * Column 1, lines 12-39; column 5, lines 55-66; figure 1 * | 1,2 | |
| A | US-A-2 133 276 (BALLANTYNE) <br> * Page 1, column 2, line 10 - page 3, column 1, line 10; figures * | 1,3,7 | |
| A | FR-A-1 580 179 (HOYER) | | |
| A | GB-A-1 149 124 (VAUXHALL) | | |

TECHNICAL FIELDS SEARCHED (Int Cl 4)

F 16 H
F 16 D

-----

The present search report has been drawn up for all claims

| Place of search | Date of completion of the search | Examiner |
|---|---|---|
| THE HAGUE | 28-11-1986 | MENDE H. |